# EUROPÄISCHE PATENTSCHRIFT

(11) **EP 2 021 585 B1**
(45) Veröffentlichungstag und Bekanntmachung des Hinweises auf die Patenterteilung: **10.11.2010**
(21) Anmeldenummer: 07726979.3
(22) Anmeldetag: 16.03.2007
(51) Int. Cl.: F01D 17/06, G01P 3/46

(54) **AKTIVES SENSORELEMENT UND VERFAHREN ZUR ERMITTLUNG DER TEMPERATUR EINES AKTIVEN SENSORELEMENTS**
ACTIVE SENSOR ELEMENT AND METHOD OF DETERMINING THE TEMPERATURE OF AN ACTIVE SENSOR ELEMENT
ÉLÉMENT DE CAPTEUR ACTIF ET PROCÉDÉ DE CAPTAGE DE LA TEMPÉRATURE D'UN ÉLÉMENT DE CAPTEUR ACTIF

(30) Priorität: 05.05.2006 DE 102006021430
(43) Veröffentlichungstag der Anmeldung: 11.02.2009
(73) Patentinhaber: Continental Automotive GmbH, 30165 Hannover (DE)
(72) Erfinder: ANTE, Johannes, 93055 Regensburg (DE); GILCH, Markus, 85419 Mauern (DE); HEINRICH, Stephan, 84076 Pfeffenhausen (DE); MURESAN, Sergiu, 400655 Cluj-Napoca (RO)
(86) Internationale Anmeldenummer: PCT/EP2007/052499
(87) Internationale Veröffentlichungsnummer: WO 2007/128610

(56) Entgegenhaltungen:
- DE-A1-102005 010 921
- GB-A- 2 337 831
- JP-A- 5 322 288

## Beschreibung

Die Erfindung betrifft ein aktives Sensorelement nach dem Oberbegriff des Anspruchs 1, sowie ein Verfahren zur Ermittlung der Temperatur eines aktiven Sensorelements.

Die von einer Brennkraftmaschine erzeugte Leistung hängt von der Luftmasse und der entsprechenden Kraftstoffmenge ab, die der Maschine zur Verbrennung zur Verfügung gestellt werden kann. Um die Leistung der Brennkraftmaschine zu steigern, ist es erforderlich der Brennkraftmaschine eine größere Menge Verbrennungsluft und Kraftstoff zuzuführen. Diese Leistungssteigerung wird bei einem Saugmotor durch eine Hubraumvergrößerung oder durch die Erhöhung der Drehzahl erreicht. Eine Hubraumvergrößerung führt aber grundsätzlich zu schwereren in den Abmessungen größeren und damit teureren Brennkraftmaschinen.

Eine viel genutzte technische Lösung zur Steigerung der Leistung einer Brennkraftmaschine ist die Aufladung. Damit bezeichnet man die Vorverdichtung der Verbrennungsluft durch einen Abgasturbolader oder auch durch einen vom Motor mechanisch angetriebenen Verdichter. Ein Abgasturbolader besteht im Wesentlichen aus einem Kompressor und einer Turbine, die mit einer gemeinsamen Welle verbunden sind und mit der gleichen Drehzahl rotieren. Die Turbine setzt die sonst nutzlos verpuffende Energie des Abgases in Rotationsenergie um und treibt den Kompressor an. Der Kompressor saugt Frischluft an, verdichtet sie und fördert die verdichtete Luft zu den einzelnen Zylindern des Motors. Der größeren Luftmenge in den Zylindern kann eine erhöhte Kraftstoffmenge zugeführt werden, wodurch die Verbrennungskraftmaschine eine deutliche Leistungssteigerung erfährt.

Der Verbrennungsvorgang wird zudem günstig beeinflusst, so dass die Verbrennungskraftmaschine einen besseren Gesamtwirkungsgrad erzielt. Darüber hinaus kann der Drehmomentverlauf einer mit einem Turbolader aufgeladenen Brennkraftmaschine äußerst günstig gestaltet werden. Die bei den Fahrzeugherstellern vorhandene Seriensaugmotoren können durch den Einsatz eines Abgasturboladers ohne große konstruktive Eingriffe an der Brennkraftmaschine wesentlich optimiert werden. Aufgeladene Brennkraftmaschinen haben in der Regel einen geringeren spezifischen Kraftstoffverbrauch und weisen eine geringere Schadstoffemission auf. Darüber hinaus sind Turbomotoren leiser als Saugmotoren gleicher Leistung, da der Abgasturbolader selbst wie ein zusätzlicher Schalldämpfer wirkt.

Bei Brennkraftmaschinen mit einem großen Betriebsdrehzahlbereich, zum Beispiel bei Brennkraftmaschinen für Personenkraftwagen, wird schon bei niedrigen Motordrehzahlen ein hoher Ladedruck gefordert. Dafür wird bei diesen Turboladern (die Begriffe Turbolader und Abgasturbolader werden hier synonym verwendet) ein Ladedruckregelventil, ein so genanntes Waste-Gate-Ventil, eingeführt. Durch die Wahl eines entsprechenden Turbinengehäuses wird schon bei niedrigen Motordrehzahlen schnell ein hoher Ladedruck aufgebaut. Das Ladedruckregelventil (Waste-Gate-Ventil) begrenzt dann bei steigender Motordrehzahl den Ladedruck auf einen gleich bleibenden Wert. Alternativ dazu kommen Turbolader mit variabler Turbinengeometrie (VTG) zum Einsatz. Bei diesen Turboladern wird der Ladedruck über die Veränderung der Turbinengeometrie reguliert.

Bei zunehmender Abgasmenge kann die maximal zulässige Drehzahl der Kombination aus dem Turbinenrad, dem Kompressorrad und der Turbowelle, die auch als Laufzeug des Turboladers bezeichnet wird, überschritten werden. Bei einer unzulässigen Überschreitung der Drehzahl des Laufzeuges würde dieses zerstört werden, was einem Totalschaden des Turboladers gleichkommt. Gerade moderne und kleine Turbolader mit deutlich kleineren Turbinen- und Kompressorraddurchmessern, die durch ein erheblich kleineres Massenträgheitsmoment ein verbessertes Drehbeschleunigungsverhalten aufweisen, werden vom Problem der Überschreitung der zulässigen Höchstdrehzahl betroffen. Je nach Auslegung des Turboladers führt schon eine Überschreitung der Drehzahlgrenze um etwa 5 % zur kompletten Zerstörung des Turboladers.

Zur Drehzahlbegrenzung haben sich die Ladedruckregelventile bewährt, die nach dem Stand der Technik von einem Drehzahlsensor angesteuert werden. Überschreitet der Ladedruck einen vorgegebenen Schwellwert, so öffnet das Ladedruckregelventil und leitet einen Teil des Abgasmassenstroms an der Turbine vorbei. Diese nimmt wegen des verringerten Massenstroms weniger Leistung auf, und die Kompressorleistung geht in gleichem Maße zurück. Der Ladedruck und die Drehzahl des Turbinenrades und des Kompressorrades werden verringert. Die WO 2006/005662 A1 offenbart die Verwendung aktiver Sensoren, wie zum Beispiel Hallsensoren oder magnetoresistiver Sensoren, zur Messung der Drehzahl der Turbowelle und zur Ansteuerung des Ladedruckregelventils. Allerdings ist für diese aktiven Sensoren die im und am Turbolader herrschende Temperatur eine kritische Größe. Auf Halbleiterbasis hergestellte Sensoren können bei Temperaturen bis zu 170 °C verwendet werden. Steigt die Temperatur im Halbleiter über diesen Wert, kann es zu irreparablen Schäden am Sensor kommen, wodurch wiederum ein fehlerhaftes Drehzahlsignal entstehen kann, was letztlich zum Überdrehen des Laufzeuges führen kann, wodurch der Turbolader zerstört werden würde.

Damit liegt der Erfindung die Aufgabe zugrunde eine Vorrichtung und ein Verfahren zur Temperaturmessung am Turbolader und insbesondere am Turbolader im Bereich des aktiven Sensors anzugeben. Das Verfahren und die Vorrichtung sollen dabei möglichst kostengünstig darstellbar sein.

Diese Aufgabe wird hinsichtlich der Vorrichtung erfindungsgemäß dadurch gelöst, dass die Strom-Spannungskennlinie der Diode zur Bestimmung der Temperatur im Sensorelement ausgewertet wird. Vorteilhaft dabei ist, dass die ohnehin in der Schutzbeschaltung des aktiven Sensorelementes vorhandene Diode auch zur Temperaturüberwachung im Sensorelement verwendet wird. Durch diese Maßnahme erhält man mit sehr geringem Aufwand Temperaturmesswerte, die von hoher Bedeutung für den Betrieb des Abgasturboladers sein können. Dabei kann das Sensorelement derart am Turbolader angebracht sein, dass die Temperatur des Turboladers an der Anbringungsstelle des Sensorelementes gemessen wird. Das Sensorelement kann aber auch von Turbolader thermisch entkoppelt sein, wenn die Drehzahlmessung an einer heißen Stelle (über 170 °C) erfolgt. Mit Hilfe der thermischen Kopplungskonstante kann dennoch unter Anwendung des erfindungsgemäßen Sensorelements auf die am Abgasturbolader herrschende Temperatur geschlossen werden.

Ist zwischen dem Signalpin und Versorgungsspannungspin ein Schalter ausgebildet, der entweder den Versorgungsspannungspin mit der Versorgungsspannung verbindet, um die Drehzahl des Abgasturboladers zu erfassen oder den Signalpin mit der Stromquelle verbindet, um die Temperatur zu erfassen, kann je nach Bedarf das entsprechende Signal (Drehzahl oder Temperatur) abgegriffen werden. Dabei ist es vorteilhaft, wenn der Schalter als digitaler Schalter ausgebildet ist.

Bei einer Weiterbildung der Erfindung wird die an der Diode abfallende Spannung als Maß für die Temperatur im Sensorelement genutzt. Spannungsmessungen im Bereich der an der Diode abfallenden Spannung erfordern nur einen geringen technischen Aufwand und sie sind kostengünstig realisierbar. Dabei kann der Spannungsabfall an der Diode digital oder analog erfasst werden.

Bei einer vorteilhaften Weiterbildung ist die Schaltung zur Erfassung der Temperatur des Sensorelementes zumindest teilweise mit auf dem ASIC des Sensorchips ausgebildet. Dies hat den Vorteil, dass eine äußere Auswerteschaltung für das Temperatursignal des Sensorelements unnötig wird. ASICs werden in der Regel nach den Wünschen der Kunden gefertigt und es ist nur ein sehr kleiner zusätzlicher Aufwand weiteren elektronischen Komponenten, wie zum Beispiel den Schalter und die Spannungsmessvorrichtung, auf demselben ASIC zu integrieren.

Gemäß einer vorteilhaften Ausführungsform ist das aktive Sensorelement auf die Außenwand des Kompressorgehäuses im Bereich des Lufteinlasses aufsetzbar. Bei dieser Ausführungsform muss keinerlei Eingriff am Kompressorgehäuse oder in dem Lufteinlass des Turboladers vorgenommen werden. Der Querschnitt des Lufteinlasses bleibt vollständig erhalten und es können keine unerwünschten Effekte in der Luftströmung vor dem Kompressorrad durch das Sensorelement oder den Sensor hervorgerufen werden. Ein starker Magnet zum Beispiel, der im kompressorseitigen Ende der Turbowelle angeordnet ist, erzeugt bei der Drehung der Turbowelle im auf der Außenwand des Kompressorgehäuses angeordneten Sensorelement eine ausreichend starke Variation des Magnetfeldes, so das in dem Sensor ein der Drehzahl der Turbowelle entsprechendes elektrisches Signal erzeugt werden kann.

Mit Hinblick auf das Verfahren wird die Aufgabe dadurch gelöst, dass ein aktives Sensorelement, das zur Erfassung der Drehzahl eines Abgasturboladers dient und das einen Sensorchip und einer Schutzbeschaltung umfasst, die zumindest eine Diode aufweist, wobei:
a) zunächst ein Schalter die Versorgungsspannung (Vcc) vom Sensorchip trennt und die Diode mit einer Spannungsquelle verbindet,
b) dann eine Spannungsmessvorrichtung den Spannungsabfall an der Diode misst und
c) schließlich aus dem gemessenen Spannungsabfall unter Kenntnis des eingespeisten Stroms auf die Temperatur im Sensorelement geschlossen wird.

Ausführungsformen der Erfindung werden in den Figuren beispielhaft dargestellt. Es zeigen:
- Figur 1: einen Abgasturbolader,
- Figur 2: den Kompressor des Abgasturboladers,
- Figur 3: das aktive Sensorelement,
- Figur 4a: den aus Figur 3 bekannten Aufbau mit erweiterter Beschaltung im Modus zur Drehzahlmessung,
- Figur 4b: den aus Figur 4a bekannten Aufbau im Modus zur Temperaturmessung,
- Figur 5: die Stromspannungskennlinien einer Diode in Ab- hängigkeit von der Temperatur.
- Figur 6: eine weitere Form der Anordnung eines aktiven Sensorelementes am Turbolader.

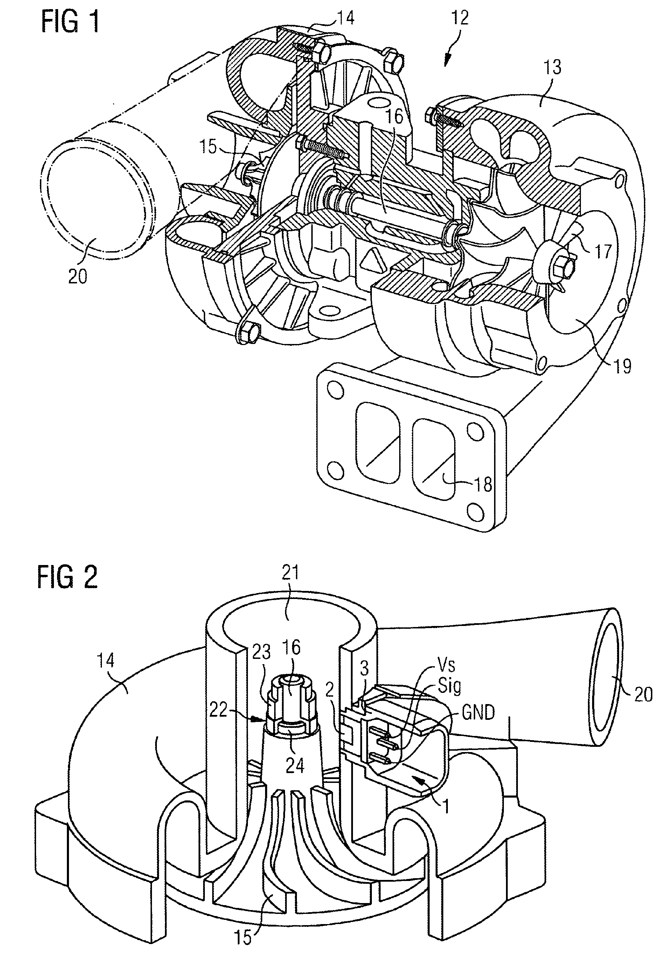

Figur 1 zeigt einen Abgasturbolader 12 mit einer Turbine 13 und einem Kompressor 14. Im Kompressor 14 ist das Kompressorrad 15 drehbar gelagert und mit der Turbowelle 16 verbunden. Auch die Turbowelle 16 ist drehbar gelagert und an ihrem anderen Ende mit dem Turbinenrad 17 verbunden. Über den Turbineneinlass 18 wird heißes Abgas von einer hier nicht dargestellten Brennkraftmaschine in die Turbine 13 eingelassen, wobei das Turbinenrad 17 in Drehung versetzt wird. Der Abgasstrom verlässt die Turbine 13 durch den Turbinenauslass 19. Mittels der Turbowelle 16 ist das Turbinenrad 17 mit dem Kompressorrad 15 verbunden. Damit treibt die Turbine 13 den Kompressor 14 an. In den Kompressor 14 wird Luft durch den Lufteinlass 21 gesaugt, die dann im Kompressor 14 verdichtet und über den Luftauslass 20 der Brennkraftmaschine zugeführt wird.

Figur 2 zeigt den Kompressor 14 des Abgasturboladers 12 mit der Turbowelle 16 und dem Kompressorrad 15. Das Kompressorrad 15 kann zum Beispiel aus einer Aluminiumlegierung in einem Feingussverfahren hergestellt sein. Das Kompressorrad 15 wird an dem kompressorseitigen Ende 22 der Turbowelle 16 in der Regel mit einem Befestigungselement 23 befestigt. Dieses Befestigungselement 23 kann zum Beispiel eine Hutmutter sein, die das Kompressorrad 15 mit einer Dichtbuchse, einem Lagerbund und einer Distanzbuchse gegen den Turbowellenbund fest verspannt. Hierzu kann am kompressorseitigen Ende 22 der Turbowelle 16 ein Gewinde ausgebildet sein.

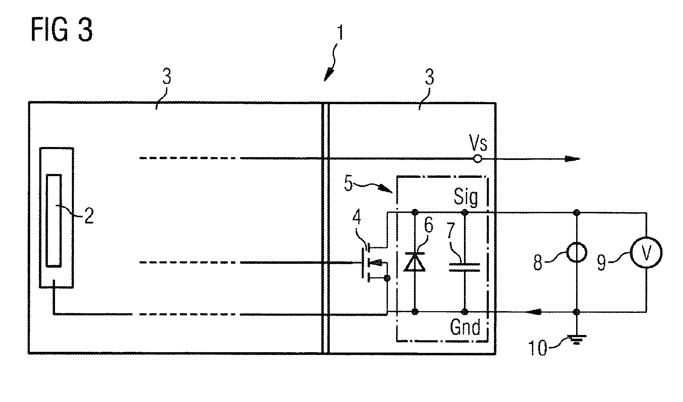

Zwischen dem Befestigungselement 23 und der Turbowelle 16 ist am kompressorseitigen Ende 22 der Turbowelle 16 ein Magnet 24 ausgebildet. Der Magnet 24 dient zur Variation eines hier nicht dargestellten Magnetfeldes während der Drehung der Turbowelle 16. Diese Variation des Magnetfeldes wird von dem aktiven Sensorelement 1 erfasst. Dazu ist im aktiven Sensorelement 1 ein Sensorchip 2 ausgebildet, der zum Beispiel als Hallelement oder magnetoresistives Element ausgeführt sein kann. Weiterhin zeigt Figur 2 am aktiven Sensorelement 1 drei elektrische Verbindungspins, wobei Vs den Versorgungsspannungspin, Sig den Signalpin und GND den Massepin bezeichnet. Diese drei Pins sind in der Regel notwendig, um ein aktives Sensorelement 1 zu betreiben. Eine elektronische Beschaltung des Sensorchips 2, die ihrerseits im Sensorgehäuse 3 untergebracht ist, wird in Figur 3 dargestellt.

Figur 3 zeigt das aktive Sensorelement 1. Ein wichtiger Bestandteil des aktiven Sensorelementes 1 ist der Sensorchip 2, der in der Regel als Hallelement oder magnetoresistives Element ausgebildet ist. Zur Auswertung der vom Sensorchip 2 erzeugten Signale ist im Sensorgehäuse 3 ein Transistor 4 ausgebildet. Hier ist der Transistor 4 als Fedleffekttransistor dargestellt. Er kann aber auch in einer anderen Ausführung, zum Beispiel als bipolarer Transistor, aufgebaut sein. Zum Schutz des Sensorchips 2 und des Transistors 4 weist das aktive Sensorelement 1 eine Schutzbeschaltung 5 auf. Die hier dargestellte Schutzbeschaltung 5 besteht aus einer Diode 6 und einer Kapazität 7. Die Diode 6 wird auch als Freilaufdiode bezeichnet. Die Kapazität 7 ist hier in diesem Beispiel parallel zur Diode 6 geschaltet.

Die genannten elektronischen Bauteile sind in der Regel gemeinsam auf einem Silizium-ASIC ausgebildet. Eine derartige elektronische Beschaltung, die eine Schutzdiode 6 beinhaltet, findet sich in nahezu jedem aktiven Sensorelement 1 zur Drehzahlmessung. Mit einer Stromquelle 8 kann nun der Diode 6 ein konstanter Strom zugeführt werden. Als Folge des Konstantstromes wird an der Diode 6 ein Spannungsabfall U_{D} erfolgen. Dieser Spannungsabfall U_{D} kann von der Spannungsmessvorrichtung 9 gemessen werden. Der Spannungsabfall U_{D} bei konstantem Strom I_{D} an der Diode 6 ist eine Funktion der Temperatur T. Damit kann anhand der mit der Spannungsmessvorrichtung 9 gemessenen Spannung U_{D} auf die Temperatur T an der Diode 6 geschlossen werden. Da die Diode 6 zusammen mit dem Sensorchip 2 auf einem ASIC ausgebildet ist, wird gleichzeitig die am Sensorchip 2 herrschende Temperatur T erfasst. Dies ist eine sehr wertvolle Information, die dazu genutzt werden kann, eine Zerstörung des aktiven Sensorelementes 1 durch eine Temperaturüberschreitung zu verhindern. Wird mit Hilfe der Stromspannungskennlinie der Diode 6 eine Temperaturüberschreitung erkannt, können Gegenmaßnahmen eingeleitet werden, um das aktive Sensorelement 1 und den Turbolader 12 zu kühlen. Hierfür ist es zum Beispiel denkbar, die Ladeluftkühlung zu verstärken, oder die Motorkühlung zu erhöhen. Vor allem nach einer sehr hohen Belastung der Brennkraftmaschine und des Turboladers, zum Beispiel durch eine schnelle Autobahnfahrt, werden im Turbolader sehr hohe Temperaturen erreicht. Wird die Fahrt nun unterbrochen und die Brennkraftmaschine abgestellt, kann es zu einem Temperaturstau im Turbolader 12 kommen, wodurch die Temperatur T im Turbolader 12 und auch im Sensorelement 1 extrem ansteigt. Dies kann zur Beschädigung des Turboladers 12 führen, indem zum Beispiel Schmiermittel auf der Turbowelle 16 verkoken. Durch die Messung der Temperatur T am Turbolader 12 mit Hilfe der Stromspannungskennlinie der Diode 6 des aktiven Sensorelementes 1, kann die Kühlung des Turboladers 12 eingeleitet werden, wodurch besagte Beschädigungen vermieden werden.

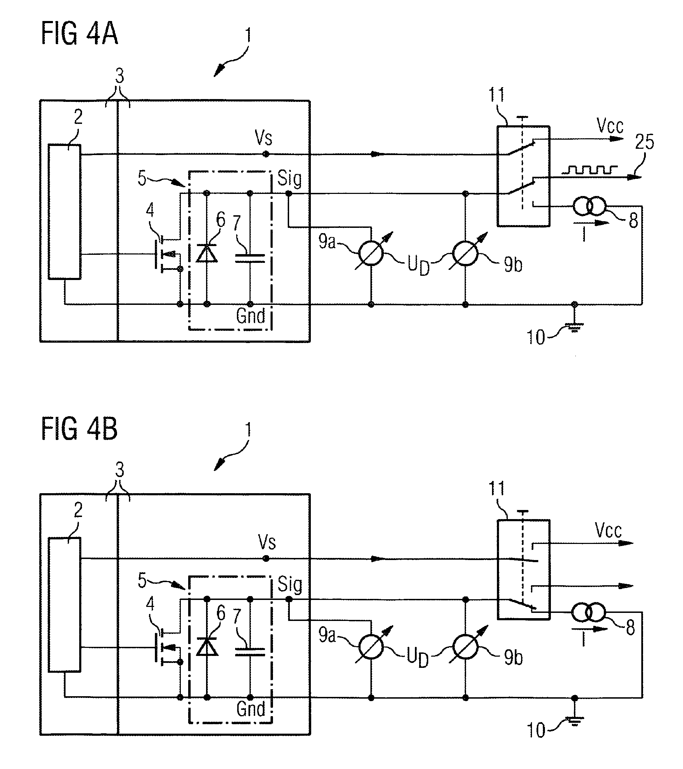

Der hier gezeigte Weg zur Bestimmung der Temperatur T am aktiven Sensorelement 1 ist äußerst kostengünstig und effizient, da das aktive Sensorelement 1 die zur Temperaturmessung genutzte Diode 6 ohnehin enthält. Es ist lediglich ein Strom I aus einer Stromquelle 8 zur Verfügung zu stellen, die in jedem Fahrzeug vorhanden ist. Darüber hinaus muss eine Spannungsmessvorrichtung 9 eingeführt werden, die sehr kostengünstig ausführbar ist. Die in Figur 3 gezeigte Schaltung aus Stromquelle 8 und Spannungsmessvorrichtung 9 kann dann zwischen den Signalpin Sig und den Massepin GND geschaltet sein. Die hier gezeigte Grundschaltung wird für den Betrieb des aktiven Sensorelementes 1 als Drehzahlsensor noch um den in Figur 4 gezeigten Schalter 11 erweitert. Dieser Schalter 11, der in der Regel als elektronischer Schalter ausgeführt sein wird, ermöglicht das Umschalten zwischen dem Drehzahlmessbetrieb (Drehzahlmodus) des aktiven Sensorelementes 1 und dem Temperaturmessbetrieb (Temperaturmodus) des aktiven Sensorelementes 1.

Figur 4a zeigt prinzipiell den aus Figur 3 bekannten Aufbau, wobei wiederum im Sensorgehäuse 3 des aktiven Sensorelementes 1 der Sensorchip 2 angeordnet ist. Der Sensorchip 2 erfasst die Variation des Magnetfeldes und somit die Drehzahl der Turbowelle 16. Das Messsignal wird vom Transistor 4 verarbeitet und die Schutzbeschaltung 5 schützt den Sensorchip 2 und den Transistor 4. Zur Drehzahlmessung ist der Sensorchip 2 mit der Versorgungsspannung Vcc über den Schalter 11 verbunden. Diese Verbindung erfolgt über den Versorgungsspannungspin Vs. Der Massepin GND des aktiven Sensorelementes 1 ist mit der Masse 10 verbunden. Bei der gezeigten Schalterstellung des Schalters 11 liefert das aktive Sensorelement 1 das Drehzahlsignal 25, das schematisch als Rechtecksignal dargestellt ist. Bei dieser Schalterstellung erfolgt keine Temperaturmessung.

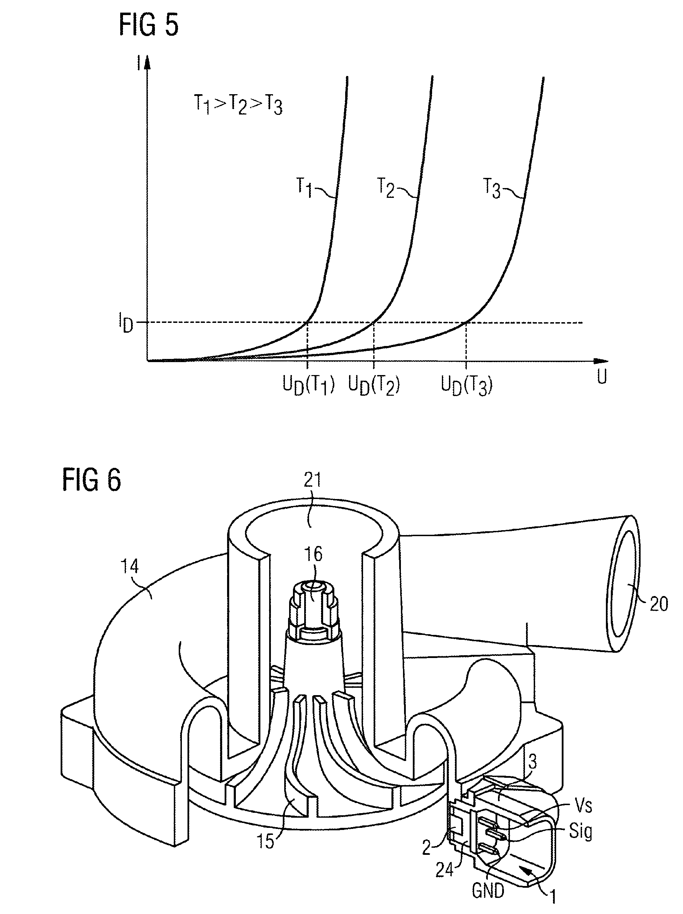

Wird der elektronische Schalter 11 jedoch umgelegt, wie in Figur 4b dargestellt, so erfolgt eine Unterbrechung der Versorgungsspannung Vcc des Sensorchips 2, und die Temperaturmessung kann erfolgen, indem nun die Stromquelle 8 mit der Diode 6 verbunden ist und ein konstanter Strom I_{D} über die Diode 6 fliest. Je nach Temperatur T auf dem ASIC und damit an der Diode 6 fällt an der Diode 6 eine bestimmte Spannung U_{D} ab. Diese Spannung U_{D} kann entweder mit einem digitalen Spannungsmesser 9a oder einem analogen Spannungsmesser 9b erfasst werden. Aus der an der Diode 6 abfallenden Spannung U_{D} beim Anlegen des konstanten Stromes I_{D} kann auf die Temperatur T an der Diode 6 geschlossen werden. Diese Temperaturcharakteristik ist in Figur 5 dargestellt.

Figur 5 zeigt die Stromspannungskennlinien einer Diode 6 in Abhängigkeit von der Temperatur T. Es ist deutlich zu erkennen, dass bei einer gewählten konstanten Stromstärke I_{D} die an der Diode 6 abfallende Spannung U_{D} eine Funktion der Temperatur T ist. Wenn zum Beispiel eine relativ kleine Spannung U_{D} (T₁) an der Diode 6 abfällt, herrscht an der Diode 6 eine hohe Temperatur T₁. Bei einem Abfall einer mittleren Spannung U_{D} (T₂) herrscht an der Diode 6 die mittlere Temperatur T₂, und beim Abfall einer hohen Spannung U_{D}(T₃) herrscht an der Diode 6 eine geringe Temperatur T₃. Somit kann mit Hilfe des Strom-Spannungskennfeldes der Diode 6 direkt auf die an ihr herrschende Temperatur geschlossen werden. Legt man das gesamte Strom-Spannungskennfeld der Diode 6 in einem elektronischen Speicher ab, kann durch jede Strom-Spannungsmessung auf die Temperatur T an der Diode 6 und am ASIC geschlossen werden. Somit wäre eine Konstantstromquelle unnötig, wenn der durch die Diode 6 fließende Strom I gemessen wird. Die Stromstärke I ist somit eine Funktion der Spannung U_{D} in Abhängigkeit von der Temperatur: I ∼ U_{D}(T).

Figur 6 zeigt eine weitere Form der Anordnung des aktiven Sensorelementes 1 zur Drehzahlmessung am Turbolader 12. Hier ist das aktive Sensorelement 1 in der Höhe der Schaufeln des Kompressorrades 15 angeordnet. Der Magnet 24 befindet sich im Sensorgehäuse 3 des aktiven Sensorelementes 1. Die Drehzahl wird nach dem Wirbelstromverfahren gemessen, wobei die Temperaturmessung analog zu der in der Figur 4b beschriebenen erfolgt. Generell ist es für das erfindungsgemäße Messprinzip unerheblich, an welcher Stelle des Turboladers 12 das aktive Sensorelement 1 angeordnet ist. Die Temperaturmessung nach dem Prinzip der Auswertung der Stromspannungskennlinie der Diode 6 kann an jeder Stelle des Turboladers 12 erfolgen. Durch die Erfindung ist ein äußerst kostengünstiges und effizientes Mittel zur Überwachung der Temperaturverhältnisse am Turbolader 12 offenbart, das auf Grund seiner Schutzwirkung für den Turbolader 12 und die Brennkraftmaschine eine nicht zu unterschätzende wirtschaftliche Bedeutung hat.

## Patentansprüche

1. Aktives Sensorelement (1) zur Erfassung der Drehzahl eines Abgasturboladers (12), mit einer Schutzbeschaltung (5), die zumindest eine Diode (6) aufweist, d a - **durch gekennzeichnet** , dass das Sensorelement mittel umfasst, die die Strom-Spannungskennlinien der Diode (6) zur Bestimmung der Temperatur (T) im Sensorelement 1 auswerten.

2. Aktives Sensorelement (1) nach Anspruch 1, **dadurch gekennzeichnet , dass** das Sensorelement (1) derart am Turbolader angebracht ist, dass die Temperatur (T) des Turboladers (12) an der Anbringungsstelle des Sensorelementes (1) gemessen wird.

3. Aktives Sensorelement (1) nach Anspruch 1 oder 2, **dadurch gekennzeichnet, dass** zwischen dem Signalpin (Sig) und Versorgungsspannungspin (Vs) ein Schalter (11) ausgebildet ist, der entweder den Versorgungsspannungspin (Vs) mit der Versorgungsspannung (Vcc) verbindet, um die Drehzahl des Abgasturboladers (12) zu erfassen oder den Signalpin (Sig) mit der Stromquelle (8) verbindet, um die Temperatur (T) zu erfassen.

4. Aktives Sensorelement (1) nach zumindest einem der Ansprüche 1 bis 3, **dadurch gekennzeichnet, dass** die an der Diode (6) abfallende Spannung (U_{D}) als Maß für die Temperatur (T) im Sensorelement (1) genutzt wird.

5. Aktives Sensorelement (1) nach zumindest einem der vorgenannten Ansprüche, **dadurch gekennzeichnet, dass** der Spannungsabfall (U_{D}) an der Diode (6) digital (9a) erfasst wird.

6. Aktives Sensorelement (1) nach zumindest einem der vorgenannten Ansprüche, **dadurch gekennzeichnet, dass** der Spannungsabfall (U_{D}) an der Diode (6) analog (9b) erfasst wird.

7. Aktives Sensorelement (1) nach Anspruch 3, **dadurch gekennzeichnet , dass** der Schalter (11) als digitaler Schalter ausgebildet ist.

8. Aktives Sensorelement (1) nach zumindest einem der vorgenannten Ansprüche, **dadurch gekennzeichnet, dass** die Schaltung zur Erfassung der Temperatur (T) des Sensorelementes (1) zumindest teilweise mit auf dem ASIC des Sensorchips (2) ausgebildet ist.

9. Aktives Sensorelement (1) nach zumindest einem der vorgenannten Ansprüche, **dadurch gekennzeichnet, dass** das aktive Sensorelement (1) auf die Außenwand des Kompressorgehäuses im Bereich des Lufteinlasses (21) aufsetzbar ist.

10. Verfahren zur Ermittlung der Temperatur (T) eines aktiven Sensorelements 1, das zur Erfassung der Drehzahl eines Abgasturboladers (12) dient und das einen Sensorchip (2) und einer Schutzbeschaltung (5) umfasst, die zumindest eine Diode (6) aufweist, wobei:
a) zunächst ein Schalter (11) die Versorgungsspannung (Vcc) vom Sensorchip (2) trennt und die Diode (6) mit einer Spannungsquelle (8) verbindet,
b) dann eine Spannungsmessvorrichtung (9) den Spannungsabfall (U_{D}) an der Diode (6) misst und
c) schließlich aus dem gemessenen Spannungsabfall (U_{D}) unter Kenntnis des eingespeisten Stroms auf die Temperatur (T) im Sensorelement (1) geschlossen wird.

## Claims

1. Active sensor element (1) for detecting the rotation speed of an exhaust gas turbocharger (12), having a protective circuit (5) which has at least one diode (6), **characterized in that** the sensor element comprises means which evaluate the current/voltage characteristic curves of the diode (6) for determining the temperature (T) in the sensor element (1).

2. Active sensor element (1) according to Claim 1, **characterized in that** the sensor element (1) is attached to the turbocharger in such a way that the temperature (T) of the turbocharger (12) at the point of attachment of the sensor element (1) is measured.

3. Active sensor element (1) according to Claim 1 or 2, **characterized in that** a switch (11) is formed between the signal pin (Sig) and the supply voltage pin (Vs), said switch either connecting the supply voltage pin (Vs) to the supply voltage (Vcc) in order to detect the rotation speed of the exhaust gas turbocharger (12) or connecting the signal pin (Sig) to the current source (8) in order to detect the temperature (T).

4. Active sensor element (1) according to at least one of Claims 1 to 3, **characterized in that** the voltage (U_{D}) which is dropped across the diode (6) is used as a measure of the temperature (T) in the sensor element (1).

5. Active sensor element (1) according to at least one of the preceding claims, **characterized in that** the voltage drop (U_{D}) across the diode (6) is detected in a digital fashion (9a).

6. Active sensor element (1) according to at least one of the preceding claims, **characterized in that** the voltage drop (U_{D}) across the diode (6) is detected in an analog fashion (9b).

7. Active sensor element (1) according to Claim 3, **characterized in that** the switch (11) is in the form of a digital switch.

8. Active sensor element (1) according to at least one of the preceding claims, **characterized in that** the circuit for detecting the temperature (T) of the sensor element (1) is at least partly formed on the ASIC of the sensor chip (2).

9. Active sensor element (1) according to at least one of the preceding claims, **characterized in that** the active sensor element (1) can be mounted on the outer wall of the compressor casing in the region of the air inlet (21).

10. Method of determining the temperature (T) of an active sensor element (1) which serves to detect the rotation speed of an exhaust gas turbocharger (12) and which comprises a sensor chip (2) and a protective circuit (5) which has at least one diode (6), with:
a) a switch (11) first disconnecting the supply voltage (Vcc) from the sensor chip (2) and connecting the diode (6) to a voltage source (8),
b) a voltage measurement apparatus (9) then measuring the voltage drop (U_{D}) across the diode (6), and
c) conclusions finally being drawn about the temperature (T) in the sensor element (1) from the measured voltage drop (U_{D}) when the fed current is known.

## Revendications

1. Elément capteur actif (1) permettant de détecter la vitesse de rotation d'une turbosoufflante à gaz d'échappement (12), ledit élément capteur comportant un circuit de protection (5) ayant au moins une diode (6), **caractérisé par le fait que** l'élément capteur comprend des moyens qui analysent les caractéristiques courant-tension de la diode (6) en vue de déterminer la température (T) dans l'élément capteur (1).

2. Elément capteur actif (1) selon la revendication 1, **caractérisé par le fait que** l'élément capteur (1) est monté sur la turbosoufflante de manière telle que la température (T) de la turbosoufflante (12) est mesurée à l'endroit où l'élément capteur (1) est monté.

3. Elément capteur actif (1) selon la revendication 1 ou 2, **caractérisé par le fait qu'**un commutateur (11) est monté entre le plot du signal (Sig) et le plot de la tension d'alimentation (Vs), lequel commutateur connecte ou bien le plot de la tension d'alimentation (Vs) avec la tension d'alimentation (Vcc) pour détecter la vitesse de rotation de la turbosoufflante à gaz d'échappement (12) ou bien le plot du signal (Sig) avec la source de courant (8) pour détecter la température (T).

4. Elément capteur actif (1) selon au moins l'une des revendications précédentes, **caractérisé par le fait que** la chute de tension (U_{D}) aux bornes de la diode (6) est utilisée comme grandeur de mesure pour la température (T) dans l'élément capteur (1).

5. Elément capteur actif (1) selon au moins l'une des revendications précédentes, **caractérisé par le fait que** la chute de tension (U_{D}) aux bornes de la diode (6) est détectée d'une façon numérique (9a).

6. Elément capteur actif (1) selon au moins l'une des revendications précédentes, **caractérisé par le fait que** la chute de tension (U_{D}) aux bornes de la diode (6) est détectée d'une façon analogique (9b).

7. Elément capteur actif (1) selon la revendication 3, **caractérisé par le fait que** le commutateur (11) est conçu comme commutateur numérique.

8. Elément capteur actif (1) selon au moins l'une des revendications précédentes, **caractérisé par le fait que** le circuit destiné à la détection de la température (T) de l'élément capteur (1) est intégré au moins partiellement sur l'ASIC (circuit intégré spécialisé) de la puce (2) du capteur.

9. Elément capteur actif (1) selon au moins l'une des revendications précédentes, **caractérisé par le fait que** l'élément capteur actif (1) peut être monté sur la paroi extérieure du carter du compresseur à proximité de l'entrée d'air (21).

10. Procédé destiné à déterminer la température (T) d'un élément capteur actif (1) qui sert à détecter la vitesse de rotation d'une turbosoufflante à gaz d'échappement (12) et qui comprend une puce (2) de capteur et un circuit de protection (5) ayant au moins une diode (6), où
a) d'abord, un commutateur (11) coupe la tension d'alimentation (Vcc) de la puce (2) de capteur et connecte la diode (6) avec une source de tension (8),
b) ensuite, un dispositif de mesure de tension (9) mesure la chute de tension (U_{D}) aux bornes de la diode (6) et
c) finalement, on déduit la température (T) dans l'élément capteur (1) à partir de la chute de tension (U_{D}) qui a été mesurée tout en connaissant l'intensité du courant qui circule.
